**Europäisches Patentamt**

**European Patent Office**

**Office européen des brevets**

(19)

(11) Veröffentlichungsnummer : **0 157 127 B1**

(12)

# EUROPÄISCHE PATENTSCHRIFT

(45) Veröffentlichungstag der Patentschrift :
25.05.88

(21) Anmeldenummer : 85101382.1

(22) Anmeldetag : 09.02.85

(51) Int. Cl.⁴ : **G 01 H 3/12, G 01 S 7/52, G 01 S 15/89, G 01 N 29/04**

(54) Schaltungsanordnung zur Trennung von Hochfrequenzimpulsen an einer akustischen Reflektionslinsenanordnung.

(30) Priorität : 17.03.84 DE 3409930

(43) Veröffentlichungstag der Anmeldung :
09.10.85 Patentblatt 85/41

(45) Bekanntmachung des Hinweises auf die Patenterteilung : 25.05.88 Patentblatt 88/21

(84) Benannte Vertragsstaaten :
CH DE FR GB LI NL

(56) Entgegenhaltungen :
EP-A- 0 039 457
US-A- 3 475 700
US-A- 4 078 217
US-A- 4 127 830
ELECTRONICS LETTERS, Band 18, Nr. 18, 2. September 1982, Seiten 767-769, London, GB; Y. GUANGQI et al.: "Pulse-compression subsurface acoustic microscopy"
JOURNAL OF ACOUSTICAL SOCIETY OF AMERICA, Band 67, Nr. 5, Mai 1980, Seiten 1629-1637, New York, US; J. HEISERMAN et al.: "Cryogenic acoustic microscopy"

(73) Patentinhaber : ERNST LEITZ WETZLAR GMBH
Ernst-Leitz-Strasse 30 Postfach 20 20
D-6330 Wetzlar 1 (DE)

(72) Erfinder : Atalar, Abdullah, Dr. Ing.
Bahcelievler 5 Sok. 47/4
Ankara (TR)
Erfinder : Fischbach, Herbert, Ing. grad.
Ringstrasse 3
D-6330 Wetzlar 21 (DE)

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft eine Schaltungsanordnung zur Trennung von zeitlich nacheinander an einem piezoelektrischen Wandler einer akustischen Reflektionslinsenanordnung entstehenden Hochfrequenzimpulsen.

Akustische Mikroskopie kann in einem Frequenzbereich von 50-5000 MHz betrieben werden. In der akustischen Reflektionsmikroskopie werden kurze Impulse dieser Frequenz mit einer Dauer von etwa 10-100 nsec und einer Pulsfolgefrequenz von etwa 500 KHz verwendet.

Die wichtigste Komponente des Mikroskops ist die akustische Linsenanordnung. Sie besteht aus einem piezoelektrischen Wandler, der elektrische Energie in akustische Energie umwandelt und umgekehrt, und einer Linsenfläche in Form einer sphärischen Höhlung in der dem Wandler gegenüberliegenden Fläche des akustischen Übertragungsmediums. Das akustische Übertragungsmedium wird so ausgesucht, daß es eine hohe Schallgeschwindigkeit besitzt, um sphärische Aberrationen zu vermindern, wenn die akustische Linse an ein flüssiges Übergangsmedium angekoppelt wird. Als Übertragungsmedium wird üblicherweise Saphir und als Ankopplungsmittel destilliertes Wasser verwendet.

Der piezoelektrische Wandler kann für einen vorgegebenen Frequenzbereich optimiert werden. Seine Bandbreite wird dabei aber ein oder zwei Oktaven nicht überschreiten. Das bedeutet, daß die akustische Linsenanordnung ausgewechselt werden muß, wenn die gewünschte Betriebsfrequenz geändert werden soll. Dabei wird jedoch gewünscht, daß der elektronische Schaltkreis, der die akustische Linsenanordnung in Form von kurzen Impulsen antreibt und die Echoimpulse von Objekt empfängt, unverändert gehalten werden kann. Der Schaltungsaufwand für den Betrieb einer akustischen Linsenanordnung ist nämlich ein wesentlicher Kostenfaktor des akustischen Mikroskop-Systems. Die notwendige elektronische Schaltung ist auch deswegen so kompliziert, weil die internen Reflektionen in dem akustischen Übertragungsmedium ziemlich hoch sind und die eigentlich interessierenden, vom Objekt kommenden Echoimpulse aufgrund der hohen Dämpfung in dem flüssigen Ankopplungsmedium relativ klein sind.

Es ist daher eine Notwendigkeit, zwischen dem Ausgang des Schaltkreises, der die Anregungsimpulse erzeugt, dem Eingang des Schaltkreises, der der Meßsignalverarbeitung dient und dem Wandler der akustischen Linsenanordnung eine Schnittstelle einzufügen, die die zeitlich nacheinander auftretenden Hochfrequenzimpulse voneinander trennt, so daß alle drei elektronischen Komponenten weitgehend voneinander entkoppelt betrachtet werden können.

Ein einfaches Schaltungselement, das diese Aufgabe jedoch nur unvollkommen löst, ist ein Mikrowellen-Zirkulator, der in einer ersten Phase den Anregungsimpuls auf den Wandler leitet, danach den Eingang sperrt und den Leitungsweg vom Wandler zur Meßsignalverarbeitungsschaltung freigibt. Zu beachten ist, daß ein solcher Zirkulator keine vollkommene Leitungstrennung erlaubt. Es gelangt also immer ein nicht zu vernachlässigender Teil des Anregungsimpulses direkt auf die Meßsignalleitung. Diesem Lecksignal überlagern sich elektrische Reflektionen, die durch Fehlanpassung der Wellenwiderstände der Zuleitung zum Wandler und des Wandlers selbst entstehen. Dieses zeitlich zuerst entstehende Signal soll mit A bezeichnet werden.

Durch interne Reflektion des Anregungsimpulses an der Grenzfläche des akustischen Übertragungsmediums zum flüssigen Ankopplungsmedium entsteht trotz Anti-Reflex-Beschichtung der Grenzfläche ein zweites Signal B. Diesed ist typischerweise 10-20dB kleiner als der Impuls A und gegenüber diesem um eine Zeit $t_1$ verzögert, die durch die Ausbreitungsgeschwindigkeit in dem akustischen Medium und die Länge des Laufweges bestimmt ist.

Mit einer weiteren Zeitverzögerung $t_2$ folgt ein Signal C, das den am Objekt reflektierten Impuls darstellt. Seine Größe ist wegen der Dämpfung in dem flüssigen Ankopplungsmedium beträchtlich kleiner als alle anderen Signale. Seine Amplitude ist bestimmt durch die Form der Linse, da diese den Laufweg in der Flüssigkeit bestimmt, durch die Betriebsfrequenz und die Dämpfungsparameter der Flüssigkeit. Die Amplitude ist typischerweise 30-90 dB niedriger als das Signal A.

Durch interne Reflektion innerhalb des Linsenkörpers kann noch ein Signal D entstehen, dessen Zeitverzögerung $t_1$ gegenüber dem Signal B beträgt.

Da der Zirkulator die Signale A, B, C, D nicht zu trennen vermag, entstehen Probleme bei der Abtrennung des eigentlich interessierenden Signals C. Die in der Praxis zur Verfügung stehenden Verstärker haben eine Große Erholzeit, nachdem sie gesättigt waren. Da das Signal B beträchtlich größer als das Signal C ist und beide Signale sehr schnell aufeinander folgen, ist die Linearität der Verstärker beim Eintreffen des Signals C in der Regel noch nicht wieder hergestellt.

Ein weiteres sehr wichtiges Problem entsteht durch die bereits erwähnte Fehlanpassung der Impedanzen auf der Zuleitung zum Wandler. Jedes Signal, das in diesen Leitungsweg eintritt, neigt dazu, für eine lange Zeit hin und her reflektiert zu werden. Aus construktiven Gründen kann die Länge dieser Zuleitung nicht beliebig klein gemacht werden. Deshalb kann die Dauer der elektrischen Reflektionen auf dieser Leitung die Zeit $t_2$ erreichen, so daß unerwünschte Interferenzprobleme mit dem Objektsignal C entstehen.

Aus Electronics Let., Vol. 14 (1978), pp. 472-473, ist eine Schaltungsanordnung bekannt, mit der das Lecksignal vom Zirkulator und störende Echosignale von der akustischen Linsenanordnung unterdrückt werden sollen. Dazu wird hinter dem Zirkulator in den Meßsignaleingang ein Schalter gesetzt, der erst nach einer Zeit geöffnet wird, die der Laufzeit des Anregungsimpulses zur Probe und zurück zum Schalter entspricht. Geeignete Schalter für solche Zwecke sind PIN-Schalter. An der hier vorgesehenen Stelle muß ein sehr reiner und damit teurer Schalter mit einem Minimum an Schalt-Spikes ausgewählt werden, da sonst ein nachfolgender Verstärker durch die Schalt-Spikes übersteuert würde, die sehr hohe Frequenzanteile enthalten. Das System hat den weiteren Nachteil, daß die bereits genannten Reflektionen auf der Zuleitung zum Wandler kaum beseitigt werden können. Außerdem begrenzen die Eigenschaften des Zirkulators den möglichen Frequenzbereich für die Anregungsimpulse und damit der Arbeitsfrequenzen für die akustomikroskopische Untersuchung, der durch Austausch des akustischen Linsensystems abgedeckt werden kann.

Aus J. Appl. Phys. Vol. 50 (1979), pp. 1245-1249, ist eine Schaltungsanordnung bekannt, bei der der Zirkulator durch einen Hybrid-Koppler ersetzt ist. Ein solcher Koppler ist ein passives Bauelement, in dem sich elektrische Signale nur in vorbestimmten Richtungen ausbreiten können. Die Dämpfung in den Richtungsleitern ist relativ groß. Die Signalverluste betragen etwa 6 dB. Zwischen einzelnen Richtungsleitern kommt es durch kapazitive Kopplung häufig zum Übersprechen der Signale.

Der bekannte Hybrid-Koppler ist so angeordnet, daß ein direkter Durchgang vom Hochfrequenz-Generator zum Wandler der akustischen Linsenanordnung und eine weitere Richtungsleitung vom Wandler zur Meßsignalverarbeitungs-Schaltung besteht. In diese Leitung ist wieder ein zeitverzögert gesteuerter Schalter eingesetzt, um die störenden Echosignale unterdrücken zu können. Vom Eingang des Hybrid-Kopplers geht noch eine weitere Richtungsleitung ab, die mit einem 50 Ω-Widerstand abgeschlossen ist. Auf diese Weise können Reflektionen gedämpft werden, die durch Fehlanpassung auf der Leitung vom Hochfrequenz-Generator zum Hybrid-Koppler entstehen. Das Problem der Reflektionen auf der Leitung vom Wandler zum Meßsignal-Eingangsschalter und der Unterdrückung der Schalt-Spikes dieses Schalters ist auch hier nicht gelöst.

Eine weitere Schaltungsanordnung zur Unterdrückung der unerwünschten Echosignale ist in der EP-PS 00 32 732 angegeben. Die dort vorgeschlagene Lösung besteht darin, neben der der Objektabtastung dienenden akustischen Linsenanordnung eine weitere akustische Linse mit denselben Konstruktionsdaten und einem Vergleichsobjekt anzuordnen. Durch Subtraktion der beiden von den Linsen zurückkommenden Signalfolgen soll nur das bereinigte Meßsignal übrigbleiben. Diese Anordnung ist wegen der zweiten Linsenanordnung sehr kostenaufwendig und bereitet bei der Realisierung gleicher Linsenparameter große Schwierigkeiten.

Aus Electronics Lett., Vol. 18 (1982), pp 767-769 ist eine Schaltungsanordnung bekannt, bei der der Zirkulator durch einen 2-Wege-PIN-Schalter ersetzt ist. Dies bringt Vorteile bei der Bandbreite, dem Ein-/Aus-Verhältnis und den Verlusten. Störpulse können durch diese Anordnung jedoch nicht unterdrück werden.

Der Erfindung lag daher die Aufgabe zugrunde, eine Schaltungsanordnung anzugeben, die mit geringem Bauteileaufwand ermöglicht, die Arbeitsphasen Anregung der akustischen Linsenanordnung, Unterdrückung der störenden Signale und Weiterleitung des Meßsignals elektrisch voneinander zu entkoppeln und mit der gleichzeitig eine Verbesserung der Meßsignalqualität erreichbar ist.

Diese Aufgabe wird bei einer Schaltungsanordnung der eingangs genannten Art erfindungsgemäß durch die kennzeichnenden Merkmale des Anspruchs 1 gelöst. Vorteilhafe Weiterbildungen ergeben sich aus den abhäugigen Ansprüchen 2 bis 4.

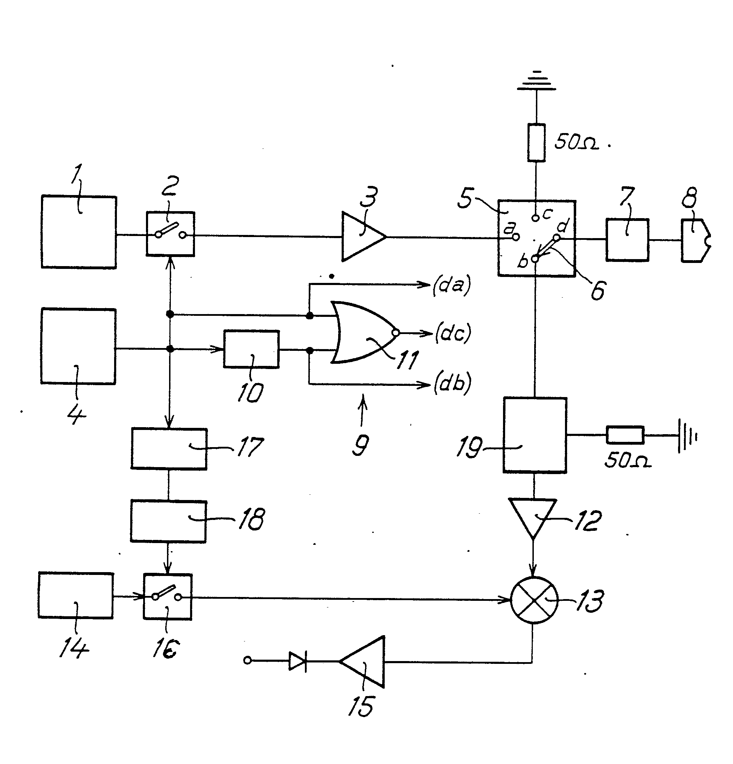

Ein Ausführungsbeispiel für die erfindungsgemäße Schaltungsanordnung wird nachfolgend anhand der Zeichnung beschrieben.

Ein Hochfrequenz-Oszillator 1 schwingt mit der gewünschten Arbeitsfrequenz für die akusto-mikroskopische Untersuchung. Mit Hilfe eines PIN-Schalters 2 werden kurze Anregungsimpulse erzeugt und in einem nachfolgenden Leistungsverstärker 3 verstärkt. Der PIN-Schalter 2 wird durch einen Puls-Oszillator 4 getaktet.

Die Anregungsimpulse werden auf den Eingang a eines Drei-Wege-PIN-Schalters 5 gegeben. Der Fußpunkt d des Schaltarmes 6 ist über ein Impedanz-Anpassungsnetzwerk 7 mit einem nicht weiter dargestellten piezoelektrischer Wandler einer akustischen Linsenanordnung 8 verbunden. Der Ausgang b des Schalters 5 ist mit dem Meßschaltkreis verbunden und der Ausgang c ist über einen 50 Ω-Widerstand mit dem Massepotential verbunden.

Die Schaltstellungen des Drei-Wege-PIN-Schalters 5 werden über ein Schaltimpuls-Netzwerk 9 angesteuert. Der den PIN-Schalter 2 steuernde Taktimpuls stellt auch die Verbindung (da) her. Mit einem um die Laufzeit des Meßimpulses in einem Verzögerungsglied 10 verzögerten Taktimpuls wird die Verbindung (db) hergestellt. Diese Schaltstellungen werden nur für die Dauer des Taktimpulses aufrechterhalten. Zu allen anderen Zeiten, in denen weder der Taktimpuls noch der verzögerte Taktimpuls an dem NOR-Gatter 11 anliegen, steuert dieses den Schaltarm 6 in die Stellung (dc).

Der Drei-Wege-PIN-Schalter 5 bringt in der Schaltungsanordnung folgende Vorteile :

a) Ein PIN-Schalter hat eine typische Bandbreite von etwa 100-4000 MHz. Er ist daher ein sehr guter Ersatz für viele Zirkulatoren, wenn ein sehr großer Frequenzbereich mit dem Anregungs- und Meßschaltungskreis abgedeckt werden soll. Ein Mikrowellen-Zirkulator hat dagegen eine typische Bandbreite von nur etwa einer Oktave.

b) Um das für den Betrieb des Systems notwendige hohe Ein-/Aus-Verhältnis für die Anregungsimpulse zu erzeugen, werden üblicherweise zwei PIN-Schalter 2 in Serie geschaltet, von denen jeder ein Ein-/Aus-Verhältnis von 60-80 dB aufweist. Der Drei-Wege-PIN-Schalter ersetzt zusätzlich einen dieser PIN-Schalter.

c) In der Schaltstellung (dc) ist die Zuleitung zum Wandler der akustischen Linsenanordnung mit einem 50 Ω-Widerstand abgeschlossen. Dieser dämpft sehr wirkungsvoll die auf dieser Leitung entstehenden Reflektionen der Echoimpulse, die damit insbesondere auch von der Leitung zum Meßschaltungskreis ferngehalten werden und hier keine Interferenzprobleme erzeugen können.

d) Der Drei-Wege-PIN-Schalter arbeitet mit sehr geringen Verlusten. Da die Schaltzustände elektrisch vollständig gegeneinander isoliert sind, entstehen keine Lecksignale auf den jeweils anderen Leitungen.

Ein Nachteil des Drei-Wege-PIN-Schalters besteht darin, daß er während der Schaltzeiten Schaltimpulse erzeugt. Die Amplituden dieser Schalt-Spikes können im ungünstigsten Fall sehr groß werden und die darin enthaltenen Frequenzanteile können bis zu sehr hohen Frequenzen reichen. Das gilt besonders, wenn ein sehr schneller PIN-Schalter verwendet wird. Die Schaltspitzen werden dann durch das Empfangssystem beträchtlich verstärkt und können durchaus Amplituden in der Größenordnung der Objektimpulse erreichen, so daß erneut Interferenzprobleme entstehen.

Diesem Nachteil kann durch eine geeignet geschaltete Superheterodyn-Schaltung im Meßschaltkreis begegnet werden, der aus einem Vorverstärker 12, einem Mischer 13, einem Lokal-Oszillator 14 und einem Zwischenfrequenzverstärker 15 besteht. Bei einer vorgegebenen Arbeitsfrequenz des akustischen Mikroskops wird die Lokal-Oszillatorfrequenz so abgestimmt, daß die Differenzfrequenz nach der Mischung im Mischer 13 gleich der Zwischenfrequenz des Zwischenfrequenzverstärkers 15 ist. Ein Zwischenfrequenzverstärker hat bei allen Frequenzen, die von der Zwischenfrequenz abweichen, nur eine sehr begrenzte Verstärkung. Sein Ausgang wird daher nahezu Null, wenn der Lokal-Oszillator gedämpft wird.

In den dargestellten Schaltungsbeispielen wird der Lokal-Oszillator 14 über einen PIN-Schalter 16 nur während der Zeit eingeschaltet, in der das Meßsignal vom Objekt ankommt. Dieses Verfahren ist also dann besonders wirksam, wenn die Schaltimpulse des Drei-Wege-PIN-Schalters 5 tatsächlich die Signalauswertung stören. Der Drei-Wege-PIN-Schalter 5 wird eingeschaltet, bevor der Lokal-Oszillator 14 geschaltet wird und er wird ausgeschaltet, nachdem der Lokal-Oszillator ausgeschaltet ist. Auf diese Weise sind die durch den Drei-Wege-PIN-Schalter erzeugten Schaltspitzen am Ausgang des Zwischenfrequenzverstärkers 15 nicht vorhanden oder zumindest sehr stark reduziert. Die notwendige Schaltfolge für den Lokal-Oszillator 14 wird durch eine entsprechende Verzögerung des vom Puls-Oszillator 4 erzeugten Taktpulses in einem Verzögerungsglied 17 und nachfolgender Tiefpaß-Filterung 18 erreicht, wodurch auch die Steilheit der Schaltflanken für den PIN-Schalter 16 abgeflacht wird.

Eine weitere Verbesserung der Signalverarbeitung kann erreicht werden, indem der Meßschaltung ein Frequenz-Multiplexer 19 vorgeschaltet wird. Er ist so ausgesucht, daß er das Eingangssignal in zwei Frequenzbereiche teilt. Der niederfrequente Ausgang des Multiplexers wird mit einem 50 Ω-Widerstand abgeschlossen und der hochfrequente Ausgang ist mit dem Vorverstärker 12 verbunden. Diese Anordnung stellt sicher, daß der überwiegende, niederfrequente Anteil in den Schaltimpulses des Drei-Wege-PIN-Schalters 5 eher auf den 50 Ω-Widerstand läuft als auf den Eingang des Vorverstärkers.

**Patentansprüche**

1. Schaltungsanordnung zur Trennung von zeitlich nacheinander an einem piezoelektrischen Wandler einer akustischen Reflektionslinsenanordnung entstehenden Hochfrequenzimpulsen, dadurch gekennzeichnet, daß dem Wandler ein Drei-Wege-PIN-Schalter (5) vorgeschaltet ist, wobei der gemeinsame Fußpunkt (d) des Schaltarmes (6) mit der akustischen Linse (8) und der Schaltarm in einer ersten Stellung (a) mit dem Ausgang eines Übertrager-Oszillators (1), in einer zweiten Stellung (c) mit einem 50 Ω-Widerstand und in einer dritten Stellung (b) mit einem Meßschaltkreis verbunden ist.

2. Schaltungsanordnung nach Anspruch 1, dadurch gekennzeichnet, daß in der dritten Schaltstellung (b) am Ausgang des Dreiwege-Schalters (5) ein Frequenzmultiplexer (19) angeschlossen ist, dessen niederfrequenter Ausgang mit einem 50 Ω-Widerstand und dessen hochfrequenter Ausgang mit dem Meßschaltkreis verbunden ist.

3. Schaltungsanordnung nach den Ansprüchen 1 und 2, dadurch gekennzeichnet, daß eine Steuerschaltung (9) vorgesehen ist, mit der die erste Schaltstellung (a) nur für die Dauer des Anregungsimpulses, die dritte Schaltstellung (b) nur für die Dauer des Meßimpulses und im übrigen die zweite Schaltstellung (c) hergestellt wird.

4. Schaltungsanordnung nach einem der vorhergehenden Ansprüche mit einer aus einem geschalteten Lokal-Oszillator (14), einem Mischer (13) und einem Zwischenfrequenz-Verstärker (15) bestehenden Superheterodyn-Empfänger-Schaltung, dadurch gekennzeichnet, daß eine Schaltimpulsformer-Schaltung (17, 18) vorgesehen ist, durch die der Lokal-Oszillator (14) zumindest während der Umschaltung des Schaltarmes (6) im Drei-Wege-PIN-Schalter (5) auf bzw. von dem Kontakt (b) zum Meßsignalausgang gedämpft wird.

**Claims**

1. Circuit arrangement for the separation of high-frequency pulses arising successively in time at a piezo-electric transducer of a reflecting acoustic lens arrangement, characterised thereby, that a three-way PIN switch (5) is connected in series to the transducer, wherein the common point (d) of the switch arm (6) is connected with the acoustic lens (8) and the switch arm is connected in a first setting (a) with the output of a transformer-coupled oscillator (1), in a second setting (c) with a resistor of 50 ohms and in a third setting (b) with a measuring switching circuit.

2. Circuit arrangement according to claim 1, characterised thereby, that in the third switch setting (b), a frequency multiplexer (19) is connected to the output of the three-way switch (5) and its low-frequency output is connected with a resistor of 50 ohms and its high-frequency output with the measuring switching circuit.

3. Circuit arrangement according to the claims 1 and 2, characterised thereby, that a control circuit (9) is provided, by which the first swith setting (a) is produced only for the duration of the excitation pulse, the third switch setting (b) only for the duration of the measurement pulse and the second switch setting (c) for the remainder.

4. Circuit arrangement according to one of the preceding claims, with a superheterodyne receiver circuit consisting of a switched local oscillator (14), a mixer (13) and an intermediate frequency amplifier (15), characterised thereby, that a switching-pulse-forming circuit (17, 18) is provided, by which the local oscillator (14) is damped at least during the change-over of the switch arm (6) in the three-way PIN switch (5) to or from the contact (b) to the measurement signal output.

**Revendications**

1. Agencement de circuit pour la séparation d'impulsions à haute fréquence se produisant successivement dans le temps dans un transformateur piézoélectrique d'un système acoustique de lentille à réflexion, caractérisé en ce qu'avant le transformateur est monté un commutateur PIN à trois voies (5), le point de pied commun (d) du bras de contact (6) est connecté à la lentille acoustique (8) et le bras de contact est connecté dans une première position (a) à la sortie d'un oscillateur transmetteur (1), dans une deuxième position (c) à une résistance de 50 ohms et, dans une troisième position (b), à un circuit de mesure.

2. Agencement de circuit selon la revendication 1, caractérisé en ce que, dans la troisième position de commutation (b), un multiplexeur de fréquence (19) est connecté à la sortie du commutateur à trois voies (5) et dont la sortie à basse fréquence est reliée à une résistance de 50 ohms et dont la sortie à haute fréquence est reliée au circuit de mesure.

3. Agencement de circuit selon les revendications 1 et 2, caractérisé en ce qu'un circuit de commande (9) est prévu, par lequel la première position de commutation (a) est établie seulement pour la durée de l'impulsion d'excitation, la troisième position de commutation (b) est établie seulement pour la durée de l'impulsion de mesure et, pour le reste, la seconde position de commutation (c) est établie.

4. Agencement de circuit selon l'une des revendication précédentes avec un montage récepteur superhétérodyne se composant d'un oscillateur local commuté (14), d'un mélangeur (13) et d'un amplificateur de fréquence intermédiaire (15), caractérisé en ce qu'un circuit conformateur d'impulsions de commande (17, 18) est prévu, par lequel l'oscillateur local (14) est amorti au moins pendant le passage du bras de contact (6) dans le commutateur PIN à trois voies (5) au contact (b) pour la sortie de signal de mesure ou depuis celui-ci.